Europäisches Patentamt

European Patent Office

Office européen des brevets

(19)

(11) Veröffentlichungsnummer: **0 061 533**
**B1**

(12) # EUROPÄISCHE PATENTSCHRIFT

(45) Veröffentlichungstag der Patentschrift:
08.05.85

(21) Anmeldenummer: 81110397.7

(22) Anmeldetag: 12.12.81

(51) Int. Cl.⁴: **B 60 T 1/06,** F 16 D 65/853,
F 16 D 55/14

(54) **Laufachse mit flüssigkeitsgekühlten Lamellenscheibenbremsen.**

(30) Priorität: 31.03.81 DE 3112671

(43) Veröffentlichungstag der Anmeldung:
06.10.82 Patentblatt 82/40

(45) Bekanntmachung des Hinweises auf die Patenterteilung:
08.05.85 Patentblatt 85/19

(84) Benannte Vertragsstaaten:
AT BE CH DE FR IT LI

(56) Entgegenhaltungen:
DE - A - 664 531
DE - A - 1 655 239
DE - A - 1 965 171
DE - A - 2 026 987
DE - A - 2 216 742
DE - A - 2 317 358
DE - A - 2 835 667
FR - A - 2 346 603
US - A - 2 016 359

(73) Patentinhaber: Welte, Alexander, Am Gansacker 13,
D-7801 Umkirch (DE)

(72) Erfinder: Welte, Alexander, Am Gansacker 13,
D-7801 Umkirch (DE)

(74) Vertreter: Patentanwälte Dipl.-Ing. Hans Schmitt
Dipl.-Ing. Wolfgang Maucher, Dreikönigstrasse 13,
D-7800 Freiburg i.Br. (DE)

## Beschreibung

Die Erfindung betrifft eine Laufachse mit flüssigkeitsgekühlten Lamellenscheibenbremsen, wenigstens zwei koaxialen, nicht angetriebenen Rädern und zumindest zwei Lamellenscheibenbremsen, die jeweils in einem mit Flüssigkeit, insbesondere Kühl-und Schmierflüssigkeit gefüllten Gehäuse angeordnet sind, wobei die Gehäuse über das Innere eines Achsrohres miteinander verbunden sind.

Eine derartige Laufachse mit flüssigkeitsgekühlten Lamellenscheibenbremsen ist aus der DE-A-664 531 bekannt. Dabei ist das Achsrohr insgesamt drehbar, weil die Räder unmittelbar auf diesem Achsrohr fixiert sind. Entsprechend kompliziert ist die Einleitung der Flüssigkeit in die verschiedenen Gehäuse und Hohlräume. Dabei verlaufen in der Laufachse selbst Leitungen, um die Gehäuse der beiden Bremsen einer Laufachse zu verbinden. Diese im Inneren der Laufachse angeordneten Leitungen sind jeweils über entsprechende Kanäle mit den Gehäusen der Lamellenscheibenbremsen verbunden. Dadurch ist ausgeschlossen, daß an dem Achsrohr eine Kühlwirkung für die Kühlflüssigkeit entsteht. Somit ist es für eine Kühlung unerläßlich, über weitere Leitungen und Kanäle sowie Anschlüsse die Flüssigkeit zu einem Kühler zu leiten, wodurch ein zusätzlicher Aufwand für den Anschluß zwischen sich bewegenden und nicht bewegenden Leitungsteilen entsteht. Darüber hinaus muß die Flüssigkeit in diesem Falle unter Druck stehen, um die Leitungswiderstände, Übergangsventile u. dgl. überwinden zu können, so daß auch die Dichtungen entsprechenden Belastungen unterworfen sind und vor allem aufgrund der durch die Fahrbewegungen auftretenden dynamischen Kräfte schneller verschleißen können.

Zum technologischen Hintergrund gehört ferner der Gegenstand der DE-A-2 835 667. Dabei handelt es sich um eine Bremseinrichtung für einen Achswellenantrieb eines land- und/oder bauwirtschaftlich nutzbaren Kraftfahrzeuges. Diese Bremseinrichtung weist innerhalb eines Gehäuses eine von einem Ausgleichsgetriebe angetriebene Welle auf, die an ihrem Ende Lamellenscheibenbremsen besitzt, wobei innerhalb des Gehäuses eine Kühlflüssigkeit angeordnet ist. Dieser Achswellenantrieb trägt jedoch keine Räder, sondern dient zur Übertragung von Bremskräften, die über einen an der Welle angeordneten Hebel aufgebracht werden und über das vorerwähnte Ausgleichsgetriebe auf angetriebene Räder übertragen werden können.

Der Erfindung liegt die Aufgabe zugrunde, eine Laufachse mit flüssigkeitsgekühlten Lamellenscheibenbremsen der eingangs erwähnten Art zu schaffen, bei der auf einfache Weise eine gute Kühlwirkung erzielt werden kann, die Dichtungen der Bremsgehäuse jedoch nur geringen Beanspruchungen unterliegen, so daß die Dichtungen für niedrige Drücke zur Abdichtung ausreichen. Aufwendige Leitungen zur Verbindung der beiden Bremsgehäuse einer derartigen Laufachse sollen weitestgehend vermieden werden.

Die Lösung dieser Aufgabe besteht darin, daß die Räder an koaxial angeordneten, in den Bremsgehäusen drehbar gelagerten Achsstummel anbringbar sind, daß das Achsrohr fest mit den Bremsgehäusen verbunden ist und sein Inneres eine unmittelbare Verbindung der koaxialen Bremsgehäuse bildet, so daß diese Einheit aus Bremsgehäusen und Achsrohr mit der Flüssigkeit gefüllt ist.

Dadurch ergibt sich eine große Flüssigkeitsmenge, die durch die Fahrbewegungen und die Oberfläche des Achsrohres genügend von ihr aufgenomene Bremswärme an die Umgebung ableiten kann. Die große Flüssigkeitsmenge erlaubt dabei den Verzicht auf eine Druckpumpe. Demgemäß braucht der Flüssigkeitsraum nicht unter hohem Druck zu stehen, so daß auch die Dichtungen nicht hoch beansprucht werden. Gleichzeitig ergibt sich ein gemeinsamer Ölhaushalt bei Schmier- und Kühlmedium. Verbindungsleitungen der Bremsgehäuse werden vermieden, da das Achsrohr sich aufgrund der drehbaren Lagerbarkeit der Achsstummel nicht mitdrehen muß. In vorteilhafter Weise kann dabei dieses Achsrohr selbst in Kühlbehälter wirken, da seine Oberfläche vom Fahrtwind umströmt wird. Entsprechend lange bleibt die Bremswirkung selbst bei Bergabfahrten erhalten.

Eine Ausgestaltung der Erfindung kann darin bestehen, daß eine Vorrichtung zum Umwälzen der Flüssigkeitsfüllung des Achsrohres und der Bremsgehäuse vorgesehen ist. Dadurch kann die natürliche Bewegung der Flüssigkeit unterstützt und der Austausch der in den Bremsgehäusen erwärmten Flüssigkeit mit der kühleren Flüssigkeit des Achsrohres beschleunigt werden. Beispielsweise kann zum Bewegen der Flüssigkeit eine Umwälzpumpe vorgesehen sein, die in vorteilhafter Weise praktisch keine Druckerhöhung bewirkt.

Die Flüssigkeitsmenge kann dadurch vergrößert sein, daß zusätzlich zu dem flüssigkeitsgefüllten Achsrohr ein Behälter vorgesehen ist, der mit dem Inneren des Achsrohres verbunden ist und in den Umwälz-Flüssigkeitsweg einbezogen ist. Da sich das Achsrohr nicht mitdreht, ist eine solche Verbindung konstruktivs einfach und verursacht keine Abdichtungsprobleme. Vor allem dann, wenn eine Vorrichtung zum Umwälzen der Flüssigkeitsfüllung vorgesehen ist, ist ein solcher Behälter vorteilhaft, da er eine Vergrößerung der Wärmekapazität durch die Vergrößerung der Flüssigkeitsmenge erlaubt. Darüber hinaus wird dadurch eine weitere Ausgestaltung der Erfindung dahingehend möglich, daß der zusätzliche Flüssigkeitsbehälter als Kühler ausgebildet sein kann. Die dabei vorzusehenden Verbindungsleitungen sind jedoch nicht an drehende Teile anzuschließen.

Gegebenenfalls kann es auch möglich sein, daß eine weitere Laufachse mit der ersten Laufachse und/oder dem zusätzlichen Behälter im Sinne eines Flüssigkeitskreislaufes verbunden ist. Dies ist vor allem bei Mehrachsanhängern u. dgl. nicht angetriebenen Fahrzeugen oder Fahrzeugteilen von Vorteil.

Eine besonders zweckmäßige Ausführungsform der Erfindung mit einer Vorrichtung zum Umwälzen der Flüssigkeit kann darin bestehen, daß die Fahrbewegung für diese Umwälzbewegung ausgenutzt wird. Dies kann daduch geschehen, daß wenigstens einer der über eine äußere Nabe drehfest mit den Rädern verbundenen Achsstummel einen vorzugsweise axial im Inneren des Achsrohres gerichteten exzentrischen Stift od. dgl. aufweist, auf dessen Umfang sich die Kolbenstange einer Kolbenpumpe als Umwälzpumpe abstützt. Der Einlaß der Umwälzpumpe kann dabei im Inneren der Laufachse und der Auslaß außerhalb des Achsrohres angeordnet sein und zu einer Kreislaufleitung gehören. Es kann jedoch auch eine entsprechende Anordnung innerhalb des Achsrohres vorgesehen sein.

Die Erfindung erlaubt aufgrund des niedrigen Flüssigkeitsdruckes eine Ausgestaltung von eigener schutzwürdiger Bedeutung. Diese kann darin bestehen, daß wenigstens eine der Bremsen zusätzlich zu ihrer pneumatischen oder hydraulischen Betätigungsvorrichtung und vorzugsweise unabhängig davon eine mechanische Betätigungsvorrichtung insbesondere für eine Feststellbremse aufweist. Es ist zwar bei Kraftfahrzeugbremsen vor allem für angetriebene Räder bekannt, neben den Betätigungszylindern für diese Bremsen auch mechanische Betätigungen vorzusehen, um eine Feststellbremse anschließen zu können. Bei in Flüssigkeiten laufenden Bremsen ist dies jedoch wegen des hohen Druckes der Flüssigkeit bisher nicht bekannt. Die Einführung der mechanischen Betätigungsmittel bedarf nämlich einer entsprechenden Abdichtung, die bei einem hohen Innendruck und der Notwendigkeit, die mechanischen Betätigungselemente entsprechend weit bewegen zu können, der Gefahr von Undichtigkeiten unterliegen würde. Da jedoch erfindungsgemäß praktisch kein Druck innerhalb der Bremsgehäuse vorgesehen ist, kann eine mechanische Betätigungsvorrichtung gleichzeitig an den in einem flüssigkeitsgefüllten Gehäuse befindlichen Bremsen angreifen.

Dabei ist es vorteilhaft, wenn am in Gebrauchsstellung oberen Bereich des Bremsgehäuses ein abgedichteter Durchtritt für eine schwenk-, dreh- und/oder hin- und herbewegbare Betätigungsstange insbesondere für die Feststellbremsvorrichtung vorgesehen ist. Im oberen Teil des Bremsgehäuses ist sogar der hydrostatische Druck der Flüssigkeitsfüllung niedrig, so daß eine recht einfache Dichtung an dem Durchtritt für die erwähnte Betätigungsstange od. dgl. ausreicht.

Eine besonders zweckmäßige Lösung der zusätzlichen, durch die Drucklosigkeit der Kühlflüssigkeit ermöglichten Erfindung kann darin bestehen, daß zusätzlich zu einem pneumatischen oder hydraulischen Arbeitszylinder ein vorzugsweise schwenkbarer Hebel zum Verdrehen der zum Betätigen der Lamellenbremsscheiben dienenden Spreizscheiben vorgesehen ist, wobei die Spreizscheiben über Kugeln od. dgl. auf Schrägflächen laufende Wälzkörper auseinanderdrückbar und dadurch gegen die Lamellenscheiben und die Gegenschreiben drückbar sind. Der schwenkbare Hebel kann dabei auf ein Übertragungsventil wirken, welches aufgrund der Schwenkbewegung des Hebels um eine Drehachse verdrehbar ist und über wenigstens einen Druckstift, -finger od. dgl. eine quer zu seiner Drehachse liegende Schubbewegung etwa tangential auf eine Spreizscheibe im Sinne von deren Verdrehung ausübt.

Das Übertragungsteil kann beidseitig seiner Drehachse Druckstifte od. dgl. zum Betätigen zweier entgegengesetzt verdrehbarer Spreizscheiben einer doppelten Lamellenscheibenbremse aufweisen. Eine entsprechend große Bremskraft ist sowohl mit der normalen Fahrzeugbremse als auch mit der Feststellbremse zu erzeugen. Dabei genügt es, wenn der Durchtritt des Betätigungshebels eine Lippendichtung aufweist, da, wie mehrfach erwähnt, kein großer Innendruck aufzufangen ist.

Eine andere Ausführungsform der Erfindung kann darin bestehen, daß als Feststelleinrichtung für die Lamellenscheibenbremsen eine Zugstange od. dgl. Zugelement vorgesehen ist, die wenigstens einen mit seinen Schrägflächen gegen die Spreizscheiben der Lamellenscheibenbremsen wirkenden Keil, vorzugsweise zwei voneinander abgewandte Keile für entgegengesetzt verdrehbare Spreizscheiben aufweist. Dabei kann die Zugstange oder Schwenkhebel wahlweise über Hydraulik- oder pneumatische Arbeitszylinder oder über einen Seilzug, ein Gestänge od. dgl. einer Fußbremse und/oder einer Feststellbremse betätigbar sein.

Insgesamt ergibt sich eine Laufachse, die eine Flüssigkeitskühlung der Bremsen erlaubt, ohne daß dabei die Bremsgehäuse unter einen hohen Pumpendruck gesetzt werden müssen. Dennoch kann die entstehende Wärme aufgrund des großen Flüssigkeitsvolumens gut abgeleitet werden. Da ein hoher Innendruck in den Bremsen vermieden ist, können komplikationslos auch mechanische Betätigungsmittel an die Bremsen und deren Betätigungseinrichtungen herangeführt werden, so daß die Bremsen gleichzeitig als Feststellbremsen benutzt werden können.

Nachstehend ist die Erfindung mit ihren ihr als wesentlich zugehörenden Einzelheiten anhand der Zeichnung noch näher beschrieben. Es zeigt

Fig. 1 einen Querschnitt durch ein Achsrohr mit exzentrischem Betätigungsstift des Achsstummels und einer Betätigungsstange einer Feststellbremse, mit einer Ansicht auf ein Bremsgehäuse von der Laufachse her,

Fig. 2 eine Seitenansicht einer Laufachse mit zwei koaxialen Achsstummeln und Scheiben zur Aufnahme von Rädern sowie in deren Bereich angeordneten Lamellenscheibenbremsen, wobei ein Bremsgehäuse im Längsschnitt dargestellt ist,

Fig. 3 einen Teillängsschnitt durch eine mechanische Betätigungsvorrichtung der Lamellenscheibenbremse eines Bremsgehäuses als Feststellbremse mit Draufsicht auf den verbleibenden Teil des Bremsgehäuses und

Fig. 4 eine teilweise aufgeschnittene Ansicht des Bremsgehäuses mit der Betätigungsvorrichtung für die Bremsen von der Radseite her,

Fig. 5 einen der Fig. 1 entsprechenden Querschnitt einer abgewandelten Ausführungsform,

Fig. 6 eine Ansicht einer Laufachse mit einem im Längsschnitt gezeigten Bremsgehäuse mit abgewandelter Betätigungsvorrichtung für die Feststellbremse,

Fig. 7 eine der Fig. 3 entsprechende, teilweise aufgeschnittene Ansicht eines Bremsgehäuses mit einer Zug-Betätigungsstange sowie

Fig. 8 eine der Fig. 4 entsprechende teilweise aufgeschnittene Ansicht des Bremsgehäuses gemäß Fig. 7.

Nachfolgend sind zwei Ausführungsformen einer jeweils im ganzen mit 1 bezeichneten Laufachse beschrieben, wobei die übereinstimmenden Teile jeweils auch übereinstimmende Bezugszeichen erhalten und die Beschreibung anhand einer Ausführungsform auch für die andere Ausführungsform gilt.

Es ist jeweils eine Laufachse 1 mit zwei koaxialen, nicht näher dargestellten Rädern und jeweils zwei im ganzen mit 2 bezeichneten Lamellenscheibenbremsen vorgesehen. Die Räder werden dabei an äußeren Scheiben oder Naben 3 befestigt, die jeweils über drehbare Achsstummel 4 an einem gemeinsamen Achsrohr 5 gelagert sind. Der die Bremsen 2 enthaltenden Raum, im folgenden auch Bremsgehäuse 6 genannt, ist mit Flüssigkeit gefüllt.

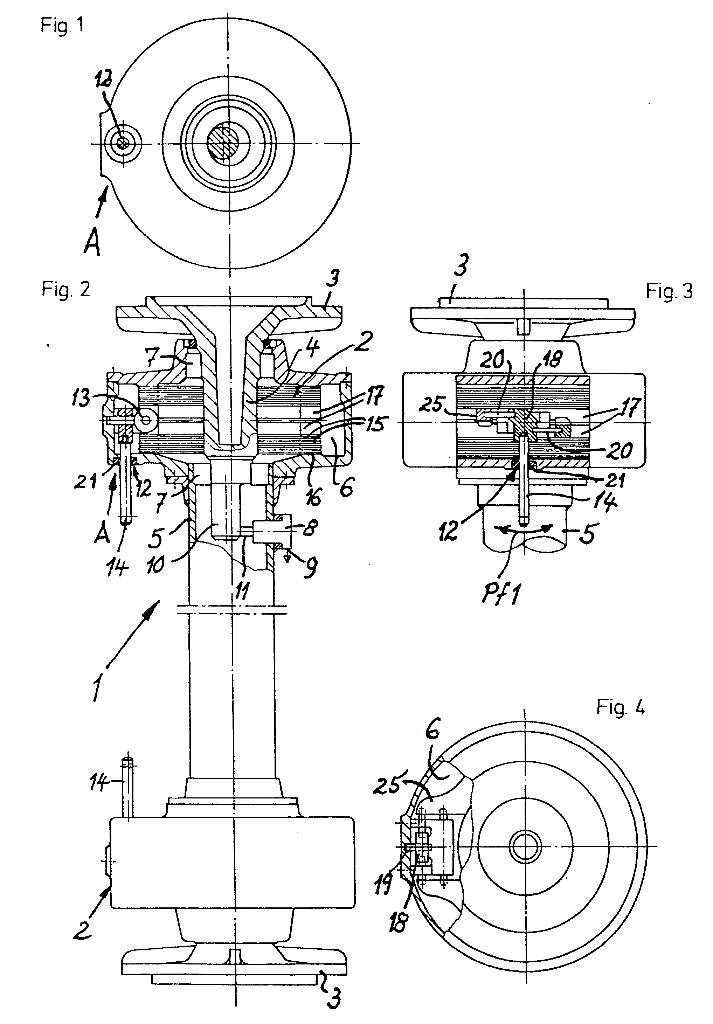

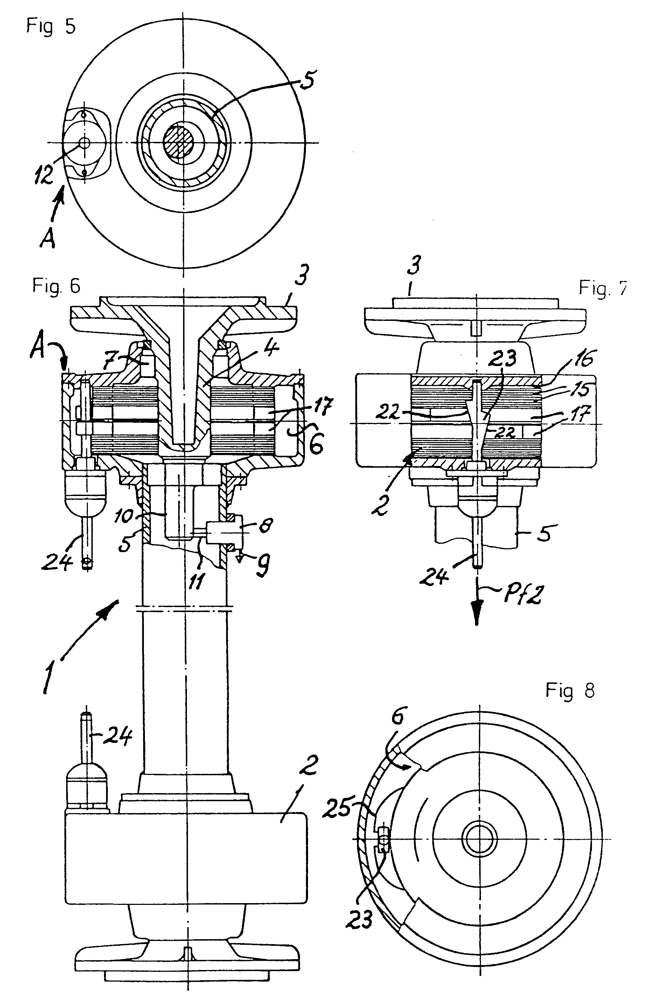

Anhand der Fig. 2 und 6 erkennt man, daß die mit Kühlflüssigkeit gefüllten Bremsgehäuse 6 über das Innere des Achsrohres 5 miteinander in unmittelbarer Verbindung stehen, so daß auch das Achsrohr 5 mit der Flüssigkeit gefüllt ist und die Flüssigkeit in dieser Einheit aus Bremsgehäusen 6 und Achsrohr 5 zirkulieren kann. Daraus ergibt sich eine relativ große Flüssigkeitsmenge, die die auch bei längeren Bergabfahrten auftretende Bremswärme gut aufnehmen und im Bereich des Achsrohres 5 durch dessen Oberfläche in ausreichendem Maße abgeben kann, zumal das Achsrohr 5 in aller Regel dem Fahrtwind ausgesetzt ist.

Die Bremsen 2 sind dabei als Lamellenscheibenbremsen ausgebildet, die sich gut dazu eignen, innerhalb einer Kühl- und auch Schmierflüssigkeit zu laufen, welche Flüssigkeit auch die Lager 7 schmiert.

Um die Bewegung der Flüssigkeit zu verstärken und einen schnelleren Austausch der Flüssigkeit der Bremsgehäuse 6 mit der im Achsrohr 5 zu erzielen, ist im Ausführungsbeispiel eine Vorrichtung zum Umwälzen der Flüssigkeitsfüllung vorgesehen, die als Umwälzpumpe 8 ausgebildet ist. Der Eintritt in diese Umwälzpumpe 8 befindet sich im Ausführungsbeispiel im Inneren des Achsrohres 5, während der Austritt 9 außerhalb angedeutet ist und über eine Leitung od. dgl. zu einem Kreislauf gehören kann. Gegebenenfalls kann dann in diesem Flüssigkeitskreislauf ein zusätzlicher Behälter zur Vergrößerung des Flüssigkeitsvolumens vorgesehen sein, der gegebenenfalls noch als Kühler ausgebildet sein kann.

Man erkennt in den Fig. 2 und 6, daß jeweils einer der über die äußere Nabe 3 drehfest mit dem jeweiligen Rad verbundenen Achsstummel 4 einen axial zum Inneren des Laufrohres 5 gerichteten, gegenüber der Mitte der Nabe 3 exzentrischen Stift 10 aufweist, auf dessen Umfang sich die Kolbenstange 11 einer Kolbenpumpe als Umwälzpumpe 8 abstützt. Dabei kann die Pumpe 8 auch als Membranpumpe ausgebildet sein, deren Membran von der Kolbenstange 11 bewegt wird. Auch eine andere Pumpe könnte an dem exzentrischen Stift 10 angeschlossen sein. Es ergibt sich so eine ganz einfache Betätigung einer Umwälzpumpe 8, da diese keinen hohen Druck erzeugen soll, sondern lediglich einen beschleunigten Flüssigkeitsaustausch zwischen wärmeren und kühleren Zonen zu bewältigen hat.

Obwohl also die Bremsgehäuse 6, die die Lamellenscheibenbremsen 2 enthalten, mit Flüssigkeit gefüllt sind, kann aufgrund des niedrigen Flüssigkeitsdruckes zusätzlich zu der pneumatischen oder hydraulischen Betätigung der Bremsen eine Betätigungsvorrichtung für eine Feststellbremse vorgesehen sein. Dies ist bei den beiden Ausführungsbeispielen in unterschiedlicher Weise realisiert, wobei jedoch jeweils am in Gebrauchsstellung oberen Bereich A des Bremsgehäuses 6 ein abgedichteter Durchtritt 12 für eine schwenk-, dreh- und/oder hin- und herbewegbare Betätigungsstange od. dgl. für die Feststellbremsvorrichtung vorgesehen ist.

Im Ausführungsbeispiel nach den Fig. 1 bis 4 ist zusätzlich zu einem pneumatischen oder hydraulischen Arbeitszylinder 13 ein in horizontaler Richtung gemäß dem Doppelpfeil Pf 1 in Fig. 3 schwenkbarer Hebel 14 zum Verdrehen der zum Zusammendrücken der Lamellenbremsscheiben 15 bzw. zum Andrücken an den feststehenden Scheiben 16 dienenden Spreizscheiben 17 vorgesehen, wobei die Spreizscheiben 17 in an sich bekannter Weise über zwischen ihnen befindliche Kugeln od. dgl. auf Schrägflächen laufende Wälzkörper auseinanderdrückbar sind. Es leuchtet ohne weiteres ein, daß beim axialen Auseinanderdrücken der beiden parallelen Spreizscheiben 17 die Lamellenscheiben gegen jeweils feststehende, zwischen ihnen eingreifende Scheiben und schließlich gegen die zum Gehäuse gehörenden Endscheiben 16 gedrückt werden. Während des Fahrbetriebes geschieht dies über den pneumatischen oder hydraulischen Arbeitszylinder 13. Zum Feststellen kann nun in erfindungsgemäßer Weise der Hebel 14 verschwenkt und dadurch etwas analoges erzielt werden.

Der schwenkbare Hebel 14 wirkt dabei gemäß Fig. 3 auf ein Übertragungsteil 18, welches aufgrund der Schwenkbewegung des Hebels 14 um eine Drehachse 19 (Fig. 4) verdrehbar ist und über wenigstens einen, im Ausführungsbeispiel zwei Druckstifte 20 jeweils eine quer zu seiner Drehachse 19 liegende Schubbewegung etwa tangential auf die Spreizscheiben 17 und daran angeordnete Vorsprünge 25 ausübt. Diese werden somit durch die Schwenkbewegung des Hebels 14 gegensinnig zueinander verdreht und durch die zwischen ihnen auf Schrägflächen laufenden Wälzkörper voneinander weg gegen die jeweiligen Lamellenscheiben 15 und 16 gedrückt. Da im Ausführungsbeispiel das Übertragungssteikl 18 beidseitig seiner Drehachse 19 solche Druckstifte 20 hat, können beide vorgesehenen Spreizscheiben 17 der doppelten Lamellenbremse betätigt werden. Der Durchtritt 12 des Betätigungshebels 14 weist dabei eine Lippendichtung 21 auf.

Im Ausführungsbeispiel nach den Fig. 5 bis 8 ist als Feststelleinrichtung für die Lamellenbremsen eine Zugstange 24 oder gegebenenfalls auch ein anderes Zugelement vorgesehen. Eine Stange hat den Vorteil, gegenläufige Bewegungen übertragen zu können. Im Inneren des Bremsraumes 6 hat die Zugstange entweder selbst oder ein mit ihr verbundenes Teil mit den jeweiligen Schrägflächen 22 gegen die Spreizscheiben 17 der Scheiben- bzw. Lamellenscheiben wirkende Keile 23, die voneinander abgewandt sind, um die entgegengesetzt verdrehbaren Spreizscheiben 17 entsprechend beaufschlagen zu können. Man erkennt dies deutlich anhand der Fig. 7. Wird die Zugstange in Richtung des Pfeiles Pf 2 bewegt, ergibt sich aus den Keilflächen jeweils eine in Umfangsrichtung der Spreizscheiben wirkende Bewegungskomponente, die an entsprechenden Vorsprüngen 25 (Fig. 8) dieser Spreizscheiben 17 in entsprechende Drehbewegungen umgesetzt werden.

Die Zugstange 24 kann wahlweise über Hydraulik- oder pneumatische Arbeitszylinder einer Betriebsbremse während des Fahrbetriebs oder über einen Seilzug, ein Gestänge od. dgl. einer Feststellbremse betätigbar sein.

Vorteilhaft ist noch, daß die Betätigungseinrichtungen der Bremse ohne Umbau der Innereien der gesamten Laufachse sowohl mechanisch, als auch pneumatisch, als auch hydraulisch sein kann. Die Anbringung der Betätigungseinrichtung der Betriebsbremse (z. B. Fußbremse), sei sie im Inneren oder außen hydraulisch oder pneumatisch, kann unabhängig von der mechanischen erfolgen.

## Patentansprüche

1. Laufachse (1) mit flüssigkeitsgekühlten Lamellenscheibenbremsen (2) wenigstens zwei koaxialen, nicht angetriebenen Rädern und zumindest zwei Lamellenscheibenbremsen (2), die jeweils in einem mit Flüssigkeit, insbesondere Kühl- und Schmierflüssigkeit gefüllten Gehäuse (6) angeordnet sind, wobei die Gehäuse (6) über das Innere eines Achsrohres (5) miteinander verbunden sind, dadurch gekennzeichnet, daß die Räder an koaxial angeordneten, in den Bremsgehäusen (6) drehbar gelagerten Achsstummel (4) anbringbar sind, daß das Achsrohr (5) fest mit den Bremsgehäusen (6) verbunden ist und sein Inneres eine unmittelbare Verbindung der koaxialen Bremsgehäuse bildet, so daß diese Einheit aus Bremsgehäusen (6) und Achsrohr (5) mit der Flüssigkeit gefüllt ist.

2. Laufachse nach Anspruch 1, dadurch gekennzeichnet, daß eine Vorrichtung zum Umwälzen der Flüssigkeitsfüllung des Achsrohres (5) und der Bremsgehäuse (6) vorgesehen ist.

3. Laufachse nach Anspruch 1 oder 2, dadurch gekennzeichnet, daß zum Bewegen der Flüssigkeit eine Umwälzpumpe (8) vorgesehen ist.

4. Laufachse nach einem der Ansprüche 1 bis 3, dadurch gekennzeichnet, daß zusätzlich zu dem flüssigkeitsgefüllten Achsrohr (5) ein Behälter vorgesehen ist, der mit dem Inneren des Achsrohres (5) verbunden ist und in den Umwälz-Flüssigkeitsweg einbezogen ist.

5. Laufachse nach einem der Ansprüche 1 bis 4, dadurch gekennzeichnet, daß der zusätzliche Flüssigkeitsbehälter als Kühler ausgebildet ist.

6. Laufachse nach einem der Ansprüche 1 bis 5, dadurch gekennzeichnet, daß eine weitere Laufachse mit der ersten Laufachse (1) und/oder dem zusätzlichen Behälter im Sinne eines Flüssigkeitskreislaufes verbunden ist.

7. Laufachse nach einem der Ansprüche 1 bis 6, dadurch gekennzeichnet, daß wenigstens einer der über eine äußere Nabe (3) drehfest mit den Rändern verbundenen Achsstummel (4) einen vorzugsweise axial zum inneren des Achsrohres (5) gerichteten exentrischen Stift (10) od. dgl. aufweist, auf dessen Umfang sich die Kolbenstange (11) einer Kolbenpumpe als Umwälzpumpe (8) abstützt.

8. Laufachse nach einem der Ansprüche 1 bis 7, dadurch gekennzeichnet, daß der Einlaß der Umwälzpumpe (8) im Inneren der Laufachse (1) und der Auslaß außerhalb des Achsrohres (5) angeordnet ist und zu einer Kreislaufleitung gehört.

9. Laufachse insbesondere nach einem der vorstehenden Ansprüche, dadurch gekennzeichnet, daß wenigstens eine der Bremsen zusätzlich zu ihrer pneumatischen oder hydraulischen Betätigungsvorrichtung und vorzugsweise unabhängig davon eine mechanische Betätigungsvorrichtung insbesondere für eine Feststellbremse aufweist.

10. Laufachse nach einem der Ansprüche 1 bis 9, dadurch gekennzeichnet, daß am in Gebrauchsstellung oberen Bereich (A) des Bremsgehäuses (6) ein abgedichteter Duchtritt (12) für eine schwenk-, dreh-, und/oder hin- und herbewegbare Betätigungsstange insbesondere für die Fststellbremsvorrichtung vorgesehen ist.

11. Laufachse nach einem der Ansprüche 1 bis 10, dadurch gekennzeichnet, daß zusätzlich zu einem pneumatischen oder hydraulischen Arbeitszylinder (13) ein vorzugsweise schwenkbarer Hebel (14) zum Verdrehen der zur Betätigung der Lamellenbremsscheiben (15) dienenden Spreizscheiben (17) vorgesehen ist, wobei die Spreizscheiben (17) über Kugeln od. dgl. auf Schrägflächen laufende Wälzkörper auseinanderdrückbar sind.

12. Laufachse nach einem der Ansprüche 1 bis 11, dadurch gekennzeichnet, daß der schwenkbare Hebel (14) auf ein Übertragungsteil (18) wirkt, welches aufgrund der Schwenkbewegung des Hebels (14) um eine Drehachse (19) verdrehbar ist und über wenigstens einen Druckstift, -finger od. dgl. eine quer zu seiner Drehachse (19) liegende Schubbewegung etwa tangential auf eine Spreizscheibe (17) ausübt.

13. Laufachse nach einem der Ansprüche 1 bis 12, dadurch gekennzeichnet, daß das Übertragungsteil (18) beiseitig seiner Drehachse (19) Druckstifte (20) od. dgl. zum Betätigen zweier Spreizscheiben (17) einer doppelten Lamellenscheibenbremse aufweist.

14. Laufachse nach einem der Ansprüche 1 bis 13, dadurch gekennzeichnet, daß der Durchtritt (12) des Betätigungshebels eine Lippendichtung (21) aufweist.

15. Laufachse nach einem der Ansprüche 1 bis 14, dadurch gekennzeichnet, daß als Feststelleinrichtung für die Lamellenscheibenbremsen eine Zugstange (24) od. dgl. Zugelement vorgesehen ist, die wenigstens einen mit seinen Schrägflächen (22) gegen die Spreizscheiben (17) der Lamellenscheibenbremsen wirkenden Keil (23), vorzugsweise zwei voneinander abgewandte Keile für entgegengesetzt verdrehbare Spreizscheiben (17) aufweist.

16. Laufachse nach einem der Ansprüche 1 bis 15, dadurch gekennzeichnet, daß der Schwenkhebel (14) oder die Zugstange (24) od. dgl. wahlweise über Hydraulik- oder pneumatische Arbeitszylinder oder über einen Seilzug, ein Gestänge od. dgl. einer Betriebs- bzw. Fußbremse und/oder einer Feststellbremse betätigbar ist.

## Claims

1. A running axle having fluid-cooled, multiple-disc brakes (2), at least two coaxial, non driven wheels and at least two multiple-disc brakes (2), said multiple-disc brakes in each case being disposed in a housing (6) filled with fluid, in particular coolant and lubricant, the housings (6) being interconnected by way of the interior ofan axle tube (5), characterized in that the wheels are adapted to be attached to axle stubs (4) which are coaxially disposed and are mounted for rotation in the brake housings (6), that the axle tube (5) is firmly connected to the brake housings (6) and its interior forms a direct connection of the coaxial brake housings, so that this unit composed of brake housings (6) and axle tube (5) is filled with the fluid.

2. The running axle as claimed in claim 1, characterized in that a means is provided for circulating the fluid filling of the axle tube (5) and brake housings (6).

3. The running axle as claimed in claim 1 or claim 2, characterized in that a circulating pump (8) is provided for moving the fluid.

4. The running axle as claimed in any one of claims 1 to 3, characterized in that in addition to the fluid-filled axle tube (5) therse is provided a vessel which is connected to the interior of the axle tube (5) and is incorporated in the circulating fluid path.

5. The running axle as claimed in any one of claims 1 to 4, characterized in that the additional fluid vessel takes the form of a radiator.

6. The running axle as claimed in any one of claims 1 to 5, characterized in that a further running axle is connected to the first running axle (1) and/or to the additional vessel in the manner of a fluid circuit.

7. The running axle as claimed in any one of claims 1 to 6, characterized in that at least one of the axle stubs (4) connected in a twist-proof manner to the wheels by way of an outer hub (3) has an eccentric pin (10) or the like, said pin or the like being preferably directed axially to the interior of the axle tube (5) and having supported on its periphery the piston rod (11) of a piston pump as circulating pump (8).

8. The running axle as claimed in any one of claims 1 to 7, characterized in that the inlet of the circulating pump (8) is disposed in the interior of the running axle (1) and the outlet is disposed outside the axle tube (5) and belongs to a circuit conduit.

9. The running axle as claimed in particular in any one of the preceding claims, characterized in that at least one of the brakes has, in addition to its pneumatic or hydraulic actuating means and preferably independently thereof, a mechanical actuating means in particular for a locking brake.

10. The running axle as claimed in any one of claims 1 to 9, characterized in that in the upper zone (A) of the brake housing (6) in the operating position there is provided a sealed passage (12) for an actuating rod in particular for the locking brake means, said actuating rod being adapted to be swivelled, turned and/or reciprocated.

11. The running axle as claimed in any one of claims 1 to 10, characterized in that in addition to a pneumatic or hydraulic working cylinder (13) there is provided a lever (14), preferably swivel-mounted, for twisting the expanding discs (17) which serve to actuate the brake discs (15), the expanding discs (17) being adaped to be urged apart from one another by way of balls or similar rolling bodies running on inclined faces.

12. The running axle as claimed in any one of claims 1 to 11, characterized in that the swivel-mounted lever (14) acts on a transmission member (18) which through the swivel motion of the lever (14) is adapted to be twisted about a pivot (19) and by way of at least one pressure pin, pressure finger or the like exerts on an expanding disc (17) an approximately tangential thrust motion transversely to its pivot (19).

13. The running axle as claimed in any one of claims 1 to 12, characterized in that the transmission member (18) has on either side of its pivot (19) pressure pins (20) or the like for actuating two expanding discs (17) of a twin-type multiple disc brake.

14. The running axle as claimed in any one of claims 1 to 13, characterized in that the passage (12) of the actuating leverhas a lip seal (21).

15. The running axle as claimed in any one of claims 1 to 14, characterized in that as locking means for the multipledisc brakes there is provided a pull rod (24) or a similar pulling element having at least one wedge (23) acting with its inclined faces (22) against the expanding discs (17) of the multiple-disc brakes, preferably two wedges averted from one another for expanding discs (17) adapted to be twisted in opposite directions.

16. The running axle as claimed in any one of claims 1 to 15, characterized in that the swivel-mounted lever (14) or the pull rod (24) or the like is adapted to be actuated optionally by way of hydraulic or pneumatic working cylinders or by way of a cable control, rod linkage or the like of a service brake or foot brake and/or locking brake.

## Revendications

1. Essieu fou (1) avec freins à disques multiples (2) refroidis par fluide, au moins deux roues coaxiales non entraînes et au moins deux freins à disques multiples (2) qui sont disposés chacun dans un carter (6) rempli de liquide, en particulier de liquide de refroidissement et de graissage, les carters (6) étant reliés entre eux par l'intermédiaire de l'intérieur d'un tube d'essieu (5), caractérisé en ce que les roues peuvent être disposées sur des fusées (4) disposées coaxialement, montées de manière à pouvoir tourner dans les carters de frein (6), en ce que le tube d'essieu (5) est relié solidairement aux carters de frein (6), et en ce que son intérieur forme une liaison directe des carters de frein coaxiaux, de sorte que cet ensemble de carters de frein (6) et de tube d'essieu (5) est rempli du liquide.

2. Essieu fou selon la revendication 1, caractérisé en ce qu'un dispositif est prévu pour faire circuler le contenu de liquide du tube d'essieu (5) et des carters de frein (6).

3. Essieu fou selon l'une des revendications 1 et 2, caractérisé en ce que pour le mouvement du liquide est prévue une pompe de circulation (8).

4. Essieu fou selon l'une des revendications 1 à 3, caractérisé en ce qu'en plus du tube d'essieu (5) rempli de liquide est prévu un récipient, qui est relié à l'intérieur du tube d'essieu (5), et est inclus dans le parcours du liquide en circulation.

5. Essieu fou selon l'une des revendications 1 à 4, caractérisé en ce que le récipient supplémentaire à liquide est conçu sous forme de radiateur.

6. Essieu fou selon l'une des revendications 1 à 5, caractérisé en ce qu'un autre essieu fou est relié au premier essieu fou (1) et/ou au récipient supplémentaire, dans le sens d'un recyclage de liquide.

7. Essieu fou selon l'une des revendications 1 à 6, caractérisé en ce qu'au moins une des fusées (4) reliées aux roues de façon solidaire en rotation par l'intermédiaire d'un moyeu extérieur (3) présente une broche excentrique (10) ou partie similaire, de préférence dirigée axialement vers l'intérieur du tube d'essieu (5), et sur la circonférence de laquelle s'appuie la tige de piston (11) d'une pompe à piston servant de pompe de cirulation (8).

8. Essieu fou selon l'une des revendications 1 à 7, caractérisé en ce que l'entrée de la pompe de circulation (8) est disposée à l'intérieur de l'essieu fou (1) et la sortie à l'extérieur du tube d'essieu (5) et appartient à un tuyau de recyclage.

9. Essieu fou selon l'une des revendications précédentes, caractérisé en ce qu'au moins un des freins présente, en plus de son dispositif d'actionnement pneumatique ou hydraulique et, de préférence, indépendamment de celuici, un dispositif d'actionnement mécanique, en particulier pour un frein de stationnement.

10. Essieu fou selon l'une des revendications 1 à 9, caractérisé en ce que sur la région (A) du carter de frein (6) située en haut en position de service est prévue une traversée rendue étanche (12) pour une tige d'actionnement pouvant pivoter, tourner et/ou aller et venir, en particulier pour le dispositif de frein de stationnement.

11. Essieu fou selon l'une des revendications 1 à 10, caractérisé en ce qu'en plus d'un vérin pneumatique ou hydraulique (13) est prévu un levier (14), de préférence pouvant pivoter, pour faire tourner les disques d'écartement (17) servant à l'actionnement des freins à disques multiples (15), les disques d'écartement (17) pouvant être poussés à s'écarter l'un de l'autre par l'intermédiaire de billes ou corps de roulement similaires courant sur des surfaces obliques.

12. Essieu fou selon l'une des revendications 1 à 11, caractérisé en ce que le levier pivotant (14) agit sur un élément de transmission (18) qui peut tourner autour d'un axe de rotation (19) en vertu du mouvement de pivotement du levier (14) et exerce à peu près tangentiellement, sur un disque d'écartement (17), par l'intermédiaire d'au moins une broche de pression, un doigt de pression ou organe similaire, un mouvement de poussée dirigé transversalement à son axe de rotation (19).

13. Essieu fou selon l'une des revendications 1 à 12, caractérisé en ce que l'élément de transmission (18) présente des deux côtés de son axe de rotation (19) des broches de pression (20) ou organs similaires pour l'actionnement de deux disques d'écartement (17) d'un double frein à disques multiples.

14. Essieu fou selon l'une des revendications 1 à 13, caractérisé en ce que la traversée (12) du levier d'actionnement présente un joint à lèvre (21).

15. Essieu fou selon l'une des revendications 1 à 14, caractérisé en ce que comme dispositif de blocage pour les freins à disques multiples est prévue une tige de traction (24) ou un élément de traction similaire qui présente au moins un coin (23) agissant par ses surfaces obliques (22) contre les disques d'écartement (17), de préférence deux coins opposés l'un à l'autre pour des disques d'écartement (17) pouvant tourner en sens opposé.

16. Essieu fou selon l'une des revendications 1 à 15, caractérisé en ce que le levier pivotant (14) ou la tíge de traction (24) ou élément similaire peut être actionné au choix par l'intermédiaire d'un vérin hydraulique ou pneumatique ou par l'intermédiaire d'un câble de traction, d'une tringlerie ou agencement similaire d'un frein de service ou à pied et/ou d'un frein de stationnement.

Fig. 1

Fig. 2

Fig. 3

Fig. 4

Fig 5

Fig. 6

Fig. 7

Fig 8